# EUROPÄISCHE PATENTSCHRIFT

(11) **EP 2 415 020 B1**
(45) Veröffentlichungstag und Bekanntmachung des Hinweises auf die Patenterteilung: **28.10.2015**
(21) Anmeldenummer: 10716745.4
(22) Anmeldetag: 18.03.2010
(51) Int. Cl.: G06T 7/00

(54) **VERFAHREN UND VORRICHTUNG ZUR FAHRSPURERKENNUNG**
METHOD AND DEVICE FOR LANE DETECTION
PROCÉDÉ ET DISPOSITIF POUR RECONNAÎTRE DES VOIES DE CIRCULATION

(30) Priorität: 30.03.2009 DE 102009003698
(43) Veröffentlichungstag der Anmeldung: 08.02.2012
(73) Patentinhaber: Conti Temic Microelectronic GmbH, 90411 Nürnberg (DE)
(72) Erfinder: KLEIN, Wladimir, 88131 Lindau (DE); WALTER, Michael, Dr., 9435 Heerbrugg (CH)
(74) Vertreter: Bobbert, Christiana
(86) Internationale Anmeldenummer: PCT/DE2010/000302
(87) Internationale Veröffentlichungsnummer: WO 2010/111992

(56) Entgegenhaltungen:
- EP-A1- 1 304 607
- EP-A1- 1 887 521
- DE-A1- 10 059 895
- JP-A- 2006 209 209
- CRAIG D'CRUZ ET AL: "Lane detection for driver assistance and intelligent vehicle applications" COMMUNICATIONS AND INFORMATION TECHNOLOGIES, 2007. ISCIT '07. INT ERNATIONAL SYMPOSIUM ON, IEEE, PI, 1. Oktober 2007 (2007-10-01), Seiten 1291-1296, XP031166661 ISBN: 978-1-4244-0976-1
- Anonymous: "Fahrbahnmarkierung", Wikipedia, 16 March 2009 (2009-03-16), pages 1-7, XP55081371, Retrieved from the Internet: URL:http://de.wikipedia.org/w/index.php?ti tle=Fahrbahnmarkierung&oldid=57964827 [retrieved on 2013-09-27]

## Beschreibung

Die Erfindung betrifft ein Verfahren und eine Vorrichtung zur Fahrspurerkennung gemäß Anspruch 1 bzw. 6.

Zunehmend werden in Fahrzeugen Fahrerassistenzsysteme eingesetzt, die den Fahrer bei der Spurhaltung des Fahrzeugs unterstützen. Assistenzsysteme, die den Fahrer beim unbeabsichtigten Verlassen der Fahrzeugspur warnen, werden im Englischen als Lane-Departure Warning Systems (LDWS) bezeichnet. Systeme, welche direkt in die Lenkung eingreifen können, werden im Englischen als Lane Keeping Systems (LKS) bezeichnet. Im Deutschen werden diese Systeme allgemein als Spurhalteassistenzsysteme bezeichnet.

Spurhalteassistenzsystem sind in der Regel in der Lage, die Fahrspur vor einem Fahrzeug zu erkennen (sog. Fahrspurerkennung), also insbesondere den Straßenverlauf. Insbesondere werden von den Spurhalteassistenzsystemen die Spurbreite, die horizontale und/oder vertikale Straßenkrümmung, die Ablage zur Spurmitte sowie die Nick- und Gierwinkel des Fahrzeugs geschätzt. Aus diesen Systemgrößen kann die Zeit bis zum Verlassen der Fahrspur berechnet werden, und der Fahrer vor einem ungewollten Verlassen der Fahrspur gewarnt bzw. das Fahrzeug mit Hilfe einer elektrischen Lenkung oder eines gezielten ESP (Elektronisches Stabilitäts-Programm)-Eingriffs in der Spur gehalten werden.

Die vorgenannten Systemgrößen können insbesondere durch eine digitale Bildverarbeitung der mit einem optischen Sensor, beispielsweise einer CMOS-Kamera, erfassten Lage vor einem Fahrzeug ermittelt werden. Hierzu wird eine spezielle Bildverarbeitungsalgorithmik eingesetzt, die Strukturen in den erfassten Bildern auswertet, die für eine Fahrzeugspur und deren Verlauf charakteristisch sind, insbesondere Fahrbahnmarkierungen. Die korrekte Funktion eines auf einer derartigen Bildverarbeitung basierenden Spurhalteassistenzsystems hängt vor allem davon ab, dass in den erfassten digitalen Bildern die für die Fahrspurerkennung wesentlichen Strukturen wie Fahrbahnmarkierungen zuverlässig und exakt erkannt werden. Für die Erfassung der Bilder werden in der Regel monochrome Kameras eingesetzt. Die zur Auswertung der Bilder eingesetzte Grauwert-basierte Spurerkennungsalgorithmen erkennen Markierungen in der erfassten monochromen Bildern vor allem aufgrund der Dunkel-Hell/Hell-Dunkel-Übergange zwischen der Strasse und Fahrbahnmarkierungen. Allerdings ist eine zuverlässige Erkennung der Markierungen nur für helle Markierungen auf dunklem Untergrund gewährleistet, aber nicht notwendigerweise für farbige Markierungen, deren Grauwert im Bild unter dem Grauwert des Untergrunds bzw. der Strasse liegt. Zum Beispiel werden in den USA Streckenabschnitte mit dunkelgelben Markierungen auf hellem Untergrund und in Deutschland Baustellen mit gelben Markierungen gekennzeichnet, und in Österreich dunkelrote Markierungen auf hellem Untergrund verwendet. Diese Markierungen sind für das menschliche Auge sehr gut zu erkennen, nicht jedoch für eine Fahrspurerkennung mit einer monochromen Kamera, da es sich um einen optischen Farbeindruck handelt.

Die DE 10 2004 061 822 A1 zeigt ein Verfahren zur Erkennung von Fahrbahnmarkierungen, insbesondere im Baustellenbereich, wobei die Fahrbahnmarkierungen in Form von Bildkoordinaten vorliegen, die aus einem farbigen Umgebungsbild eines Kraftfahrzeugs ermittelt werden. Hierbei werden anhand von Sättigungswerten und Farbtonwerten gelbe und weiße Fahrbahnmarkierungen ermittelt.

EP 1 304 607 A1 zeigt ein Fahrpsurerkennungssystem, bei dem aus mehreren hinterlegten ein Bildverarbeitungsalgorithmus ausgewählt wird, der zur Erkennung der Fahrspur der aktuell befahrenen Straße am besten geeignet ist.

EP 1 887 521 A1 zeigt eine Fahrzeug- und Verkehrszeichenerkennungsvorrichtung, die eine Farbbildkamera und Bildverarbeitungsmittel umfasst. Letztere ermöglichen eine Bildsegmentierung aufgrund von ähnlichen Farbeigenschaften, das Durchführen eines Weißabgleichs für jedes Bildsegment und eine Verkehrszeichenerkennung aus dem abgeglichenen Farbbild. Bei der Farbeigenschaft kann es sich insbesondere um die Luminanz handeln. Farbige Fahrspurmarkierungen (z.B. gelb) können aus dem abgeglichenen Farbbild erkannt werden.

Craig D'Cruz et al: "Lane detection for driver assistance and intelligent vehicle applications" Communications and Information Technologies 2007 (ISCIT '07) S. 1291-1296 zeigen ein Verfahren zur Fahrspurerkennung, bei dem zunächst ein geeigneter Schwellwert berechnet wird, um Fahrbahnmarkierungen aus einem Farbbild zu extrahieren. Dazu wird das Farbbild in ein Grauwertbild konvertiert und anschließend unter Einsatz des berechneten Schwellwerts in ein Schwarzweißbild umgewandelt. Mit Hilfe dieses Schwairzweißbildes wird durch einen Fahrspurerkennungsalgorithmus die Fahrspur erkannt.

Die japanische Offenlegungsschrift JP 2006 209209 A lehrt die Durchführung einer Farbkorrektur von Farbbildern, um einer Fahrspurerkennung die Erkennung gelber und weißer Fahrspurmarkierungen trotz anderer farbiger Lichtquellen wie Straßenlampen oder Scheinwerfer zu ermöglichen. Hierzu werden aus den RGB-Werten des Farbbildes Mittelwerte berechnet, die zum Ermitteln eines Helligkeitswertes des Straßenbereichs gemittelt werden. Die RGB-Mittelwerte werden dann vom ermittelten Helligkeitswert des Straßenbereichs subtrahiert. Hierdurch soll die Erkennung von weißen und gelben Fahrspurmarkierungen verbessert werden.

Nach der aus der deutschen Offenlegungsschrift DE 100 59 859 A1 bekannten technischen Lehre werden Fahrspurmarkierungen basierend auf morphologischen Eigenschaften erkannt.

Aufgabe der vorliegenden Erfindung ist es, ein Verfahren und eine Vorrichtung zur Fahrspurerkennung vorzuschlagen, die eine zuverlässig Fahrspurerkennung auch in den vorstehend geschilderten Situationen mit farbigen Markierungen ermöglichen.

Diese Aufgabe wird durch ein Verfahren zur Fahrspurerkennung mit den Merkmalen nach Anspruch 1 und eine entsprechende Vorrichtung mit den Merkmalen nach Anspruch 6 gelöst. Weitere Ausgestaltungen der Erfindung ergeben sich aus den abhängigen Ansprüchen.

Ein wesentlicher Gedanke der Erfindung besteht nun darin, dass ein Farbimager zur Bilderfassung eingesetzt wird, und eine spezielle Vorverarbeitung mit den erfassten digitalisierten Farbbildern durchgeführt wird, so dass herkömmliche Algorithmen zur Spurerkennung, die auf monochromen Bildern basieren, auch farbige Markierungen zuverlässig erkennen können. Die Vorverarbeitung weist folgende Schritte auf: in einem mit einem Farbimager digitalisierten Farbbild einer Fahrbahn werden Markierungen auf der Fahrbahn ermittelt, deren Grauwert unter dem Grauwert der Fahrbahn liegt; der Grauwert von derart ermittelten Markierungen wird anschließend auf einen Wert oberhalb des Grauwerts der Fahrbahn gesetzt, so dass ein nachfolgender Fahrspurerkennungsalgorithmus die farbigen Markierungen aufgrund der nun nach der Vorverarbeitung ausreichenden Hell-Dunkel/Dunkel-Hell-Übergänge als für die Fahrspurerkennung wesentliche Markierungen identifizieren kann. Mit dem Grauwert eines Bildpunkts eines Farbbilds ist der Grauwert gemeint, den dieser Bildpunkt bei der Umwandlung des Farbbilds in ein monochromes Bild erhält. Durch die Erfindung können also weiterhin bewährte Algorithmen zur Fahrspurerkennung benutzt werden, die monochrome Bilder verarbeiten. Trotz der Verwendung derartiger Algorithmen ermöglicht die Erfindung eine zuverlässige Erkennung von farbigen Markierungen.

Die Erfindung betrifft nun gemäß einer Ausführungsform ein Verfahren zur Fahrspurerkennung, bei dem ein digitalisiertes Farbbild einer Fahrbahn mit den folgenden Schritten verarbeitet wird:
- Ermitteln von Markierungen auf der Fahrbahn, deren Grauwert unter dem Grauwert der Fahrbahn liegt,
- Setzen des Grauwerts von derart ermittelten Markierungen auf einen Wert oberhalb des Grauwerts der Fahrbahn, und
- Ausgeben des so verarbeiteten und geänderten Bildes zur Verarbeitung durch einen Fahrspurerkennungsalgorithmus für monochrome Bilder.

Das digitalisierte Farbbild kann von einem Farbimager stammen, der beispielsweise in einer Farbkamera eines Fahrerassistenzsystems, insbesondere eines Spurerkennungssystems eingebaut sein kann. Das Ermitteln der Markierungen kann durch eine Pixelanalyse des digitalisierten Bildes erfolgen, bei der von jedem Pixel der Grauwert ermittelt wird und als Grauwert der Fahrbahn derjenige Grauwerte verwendet wird, den die Mehrheit der analysierten Pixel aufweist. Alle Pixel, deren Grauwert geringer ist als der so ermittelte "Mehrheits"-Grauwert können dann den Markierungen mit einem geringeren Grauwert als den der Fahrbahn zugeordnet werden. Um zu vermeiden, dass nur einzelne Punkte im Bild, die keine Markierungen sind, aber eine geringeren Grauwert als den der Fahrbahn aufweisen, als Markierungen klassifiziert werden, können ferner nur Pixel mit einer geringeren Grauwert als den der Fahrbahn einer Markierung zugeordnet werden, sofern sie eine bestimmte Ausdehnung im Bild überschreiten oder gar eine bestimmte Gestalt besitzen wie eine längliche strichförmige Struktur, wie sie beispielsweise durch eine Straßenmarkierung typischerweise erzeugt werden würde.

Das Verfahren ist ferner durch die folgenden Schritte gekennzeichnet:
- Auswertung der einzelnen Farbkomponenten des Farbbildes und
- Ermitteln der Farben von Markierungen auf der Fahrbahn anhand der ausgewerteten Farbkomponenten.

Hierdurch können ganz gezielt farbige Markierungen im Bild und deren Farbe ermittelt werden, was insbesondere eine Unterscheidung bzw. Klassifikation von Markierungen im Bild ermöglicht, beispielsweise in der Art, dass Markierungen entweder als Straßenmarkierungen, Baustellenmarkierung oder sonstige spezielle Markierungen klassifiziert werden.

Insbesondere werden die ermittelten Farben von Markierungen zur Plausibilisierung einer Fahrspurerkennung ausgegeben.

Es wird anhand der ausgegebenen Farben von Markierungen durch einen Spurerkennungsalgorithmus festgestellt, ob einzelne von ihm als Straßenmarkierungen klassifizierte Markierungen korrekt klassifiziert wurden. Ergibt sich beispielsweise, dass eine als Straßenmarkierungen klassifizierte Markierung eine gelbe oder rote Farbe aufweist, die für Straßenmarkierungen nicht oder nur selten verwendet werden, kann der Fahrspurerkennungsalgorithmus derartige Markierungen für eine Spurerkennung ignorieren.

Um wechselnden Beleuchtungsverhältnissen wie beispielsweise bei Sonnenaufgang/-untergang, Tunneldurchfahrten bei Kunstlicht etc. gerecht zu werden, kann vor dem Schritt des Ermittelns von Markierungen ein automatischer Weißabgleich des Farbbildes durchgeführt werden.

Insbesondere kann der Weißabgleich durch eine adaptive Auswertung der Fahrbahn unmittelbar vor einem Fahrzeug erfolgen.

Weiterhin kann hierzu ein derart großer Ausschnitt der Fahrbahn gewählt wird, dass der Einfluss lokaler Abweichungen in der Farbigkeit auf den Weißabgleich vernachlässigt werden kann. Somit fallen etwaige lokale Abweichungen in der Farbigkeit nicht so sehr ins Gewicht.

Unter der Annahme einer farbig neutralen Fahrbahn kann vor allem eine Farbdifferenz und davon abhängig ein Korrekturfaktor für den Weißabgleich bestimmt werden.

Gemäß einer weiteren Ausführungsform betrifft die Erfindung eine Vorrichtung zur Fahrspurerkennung, die zur Verarbeitung eines digitalisierten Farbbildes einer Fahrbahn wie folgt ausgebildet ist:
- Ermitteln von Markierungen auf der Fahrbahn, deren Grauwert unter dem Grauwert der Fahrbahn liegt,
- Setzen des Grauwerts von derart ermittelten Markierungen auf einen Wert oberhalb des Grauwerts der Fahrbahn, und
- Ausgeben des so verarbeiteten und geänderten Bildes zur Verarbeitung durch einen Fahrspurerkennungsalgorithmus für monochrome Bilder.

Die Vorrichtung kann ferner gemäß einer Ausführungsform der Erfindung ausgebildet sein, ein Verfahren gemäß der Erfindung und wie oben erläutert auszuführen.

Weiterhin betrifft die Erfindung gemäß einer Ausführungsform ein automatisches Fahrspurwechselwarnsystem oder Fahrspurhaltesystem, das eine Vorrichtung nach der Erfindung und wie vorstehend beschrieben aufweist.

Schließlich betrifft die Erfindung gemäß einer Ausführungsform ein Fahrzeug mit einem automatischen Fahrspurwechselwarnsystem oder Fahrspurhaltesystem nach der Erfindung und wie vorstehend beschrieben.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1: ein Flussdiagramm eines Ausführungsbeispiels des Verfahrens zur Fahrspurerkennung mittels eines Farbbildes gemäß der Erfindung;
- Fig. 2: ein mit einer Kamera eines Fahrzeugs erfasstes monochromes Bild einer Fahrbahn mit einer gelben Seitenrandmarkierung einer Fahrspur vor Durchführung des erfindungsgemäßen Verfahrens;
- Fig. 3: ein mit einer Kamera eines Fahrzeugs erfasstes monochromes Bild einer Fahrbahn mit einer gelben Seitenrandmarkierung einer Fahrspur nach Durchführung des erfindungsgemäßen Verfahrens; und
- Fig. 4: ein Blockschaltbild eines Ausführungsbeispiels einer Vorrichtung zur Fahrspurerkennung mittels eines Farbbildes gemäß der Erfindung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

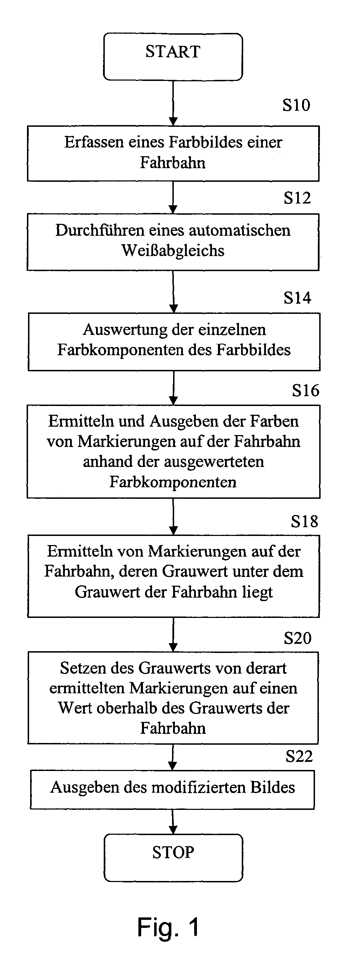

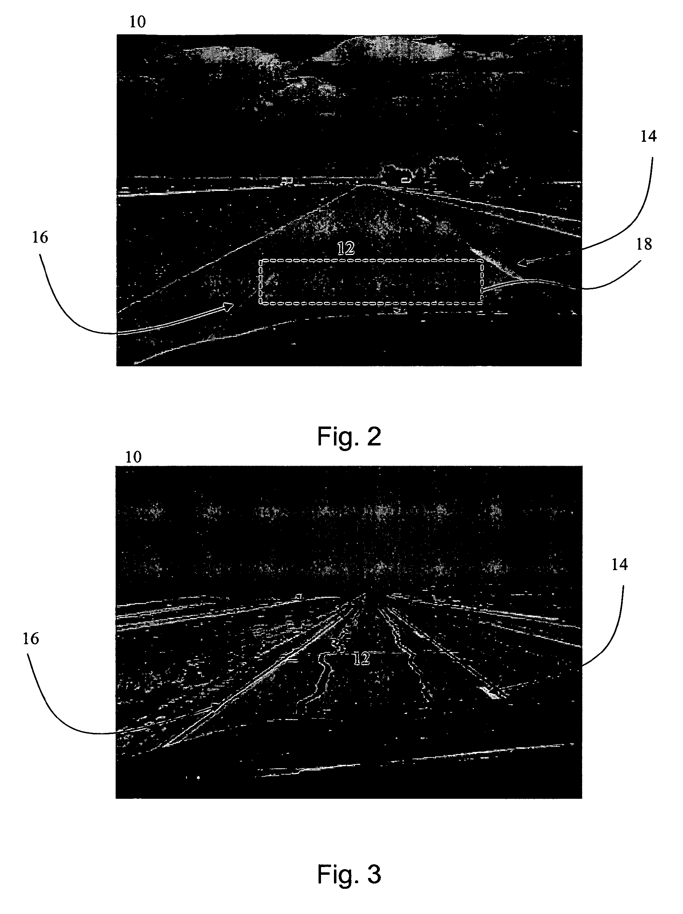

Das erfindungsgemäße Verfahren zur Fahrspurerkennung wird eingesetzt, um Farbbilder derart zu bearbeiten, dass sie zur Verarbeitung durch einen Fahrspurerkennungsalgorithmus geeignet sind, der auf Basis monochromer Bilder und weißer Markierungen auf einer Fahrbahn arbeitet, wie sie in der Regel zur Fahrspurmarkierung in vielen Ländern eingesetzt werden. Ein Flussdiagramm eines Programms, welches das erfindungsgemäß Verfahren implementiert, ist in Fig. 1 dargestellt. Im Folgenden wird nun das Verfahren anhand des in Fig. 1 dargestellten Flussdiagramms und der in den Fig. 2 und 3 gezeigten Bildern einer Fahrbahn erläutert.

Zunächst wird im Schritt S10 des Verfahrens ein Farbbild 10 einer Fahrbahn vor einem Fahrzeug erfasst, insbesondere mit einer Farbkamera, die beispielsweise im Bereich des Rückspiegels an der Windschutzscheibe des Fahrzeugs montiert ist. Im Farbbild können die Farben beispielsweise nach dem RGB- oder YUV-Farbraum kodiert sein.

Das Farbbild wird im Schritt S12 einem automatischen Weißabgleich unterzogen, um wechselnden Beleuchtungsverhältnissen gerecht zu werden. Für den Weißabgleich wird aus dem Bild 10 ein Ausschnitt 18 der Fahrbahn derart gewählt, dass der Einfluss lokaler Abweichungen in der Farbigkeit auf den Weißabgleich vernachlässigt werden kann. Wie in Fig. 1 zu erkennen ist, wurde als Ausschnitt 18 im Wesentlichen die weitgehend homogene Fahrbahn ohne Markierungen gewählt, so dass keine größeren Abweichungen der Farbigkeit auftreten, sondern lediglich kleinere lokale Abweichungen.

Anschließend werden im Schritt S14 die im Farbbild enthaltenen Farbkomponenten ausgewertet, beispielsweise indem die RGB-Anteile getrennt werden, so dass ein Bild mit R-Anteilen, eines mit G-Anteilen und eines mit B-Anteilen erhalten wird. In jedem dieser Bilder werden nun mit einem Mustererkennungsalgorithmus Markierungen ermittelt, die für eine Fahrspurerkennung wesentlich sind. Auf diese Weise kann vor allem ermittelt werden, welche Farbe(n) bzw. Farbanteile einzelne Markierungen besitzen, was für die Fahrspurerkennung deswegen von Bedeutung sein kann, da beispielsweise farbige Baustellenmarkierungen schnell erkannt und von normalen weißen Straßenmarkierungen deutlich unterschieden werden können. Weiterhin können die ermittelten Farben der Markierungen ausgegeben und für eine Plausibilisierung von Markierungen verwendet werden, die durch eine Fahrspurerkennung auf Basis monochromer Bilder erkannt werden. Die im Schritt S14 ermittelten Farben von Markierungen werden im Schritt S16 zur Plausibilisierung durch eine Fahrspurerkennung ausgegeben.

Die folgenden Schritte S18-S22 werden mit einer monochromen Darstellung des Farbbildes 10 durchgeführt. Fig. 2 zeigt ein Beispiel eines solchen Farbbildes 10 in monochromer Darstellung, d.h. nach einer Umwandlung des Farbbildes in ein Grauwertbild. Die im Bild erkennbare Fahrbahn 12 weist zwei Fahrspuren auf, die durch eine weiße Mittelstreifenmarkierung 14 voneinander getrennt sind. Die linke Fahrspur ist zudem links durch eine in Fig. 2 aufgrund der monochromen Darstellung deutlich schlechter als die weiße Mittelstreifenmarkierung erkennbare gelbe Seitenrandmarkierung 16 begrenzt. Durch die Umwandlung des Farbbildes in ein Grauwertbild 10 liegt der Grauwert der gelben Seitenrandmarkierung 16 unter dem der Fahrbahn, wie in Fig. 2 deutlich zu erkennen ist. Ein Fahrspurerkennungsalgorithmus, der auf Basis von monochromen Bildern arbeitet, würde daher die gelbe Seitenrandmarkierung nicht als für die Fahrspurerkennung wesentliche Markierung klassifizieren.

Im Schritt S18 werden daher Markierungen auf der Fahrbahn ermittelt, deren Grauwert unter dem Grauwert der Fahrbahn liegt, wie in Fig. 2 die gelbe Seitenrandmarkierung 16. Im anschließenden Schritt S20 werden dann für die in Schritt S18 ermittelten Markierungen deren Grauwerte auf einen Wert oberhalb des Grauwerts der Fahrbahn gesetzt, das Bild also modifiziert. Ein derart modifiziertes Bild 10 ist in Fig. 3 gezeigt. Deutlich ist nun die gelbe Seitenrandmarkierung 16 zu erkennen, genauso wie die weiße Mittelstreifenmarkierung 14. Die Markierungen 14 und 16 weisen nun ausreichend große Hell-Dunkel/Dunkel-Hell-Unterschiede zur Fahrbahn auf, um als für eine Fahrspurerkennung wesentliche Markierungen von einem auf Basis monochromer Bilder arbeitenden Fahrspurerkennungsalgorithmus identifiziert zu werden. Schließlich wird im Schritt S22 das so verarbeitete und geänderte Bild 10 ausgegeben, um einem Fahrspurerkennungsalgorithmus zur Verarbeitung zugeführt zu werden.

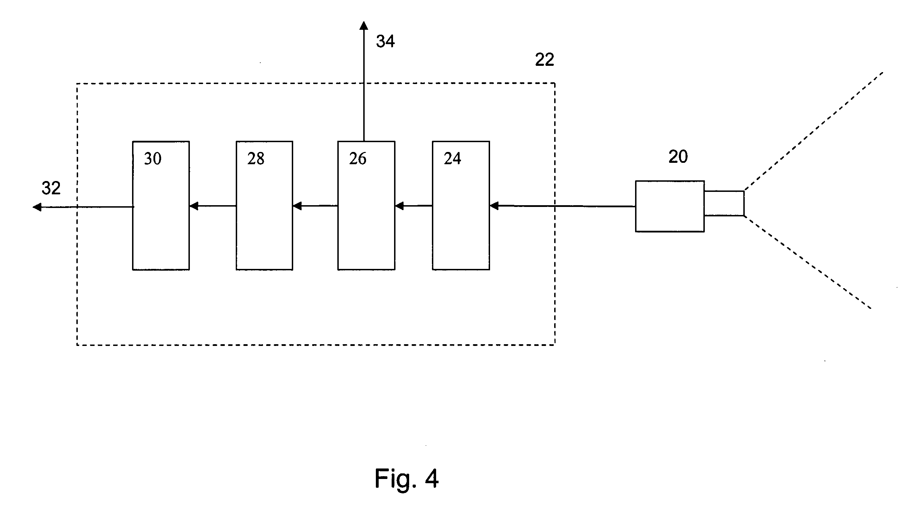

Fig. 4 zeigt eine Fahrspurerkennungsvorrichtung 22 zur Verarbeitung der von einer Fahrzeug-Farbkamera 20 erfassten digitalisierten Bilder gemäß der Erfindung. Die Vorrichtung 22 umfasst einen Weißabgleicher 24 zur Durchführung des Verfahrensschritts S12, einen Farbkomponentenermittler 26 zur Durchführung der Verfahrensschritte S14 und S16 und Ausgabe von Daten 34 bezüglich der Farben von ermittelten Markierungen, einen Grauwertermittler 28 zur Durchführung des Verfahrensschritts S18 und einen Grauwertmodifikator 30 zur Durchführung der Verfahrensschritte S20 und S22 und Ausgabe der modifizierten monochromen Bild für eine Fahrspurerkennung. Die Elemente 24, 26, 28 und 30 können beispielsweise durch einen leistungsfähigen Mikroprozessor implementiert sein, der durch ein spezielles Programm derart konfiguriert ist, dass er das erfindungsgemäße Verfahren, wie es beispielsweise in Fig. 1 anhand eines Flussdiagramms dargestellt ist, implementieren kann. Einzelne oder alle Elemente können auch in Logik implementiert sein, beispielsweise in Form eines oder mehrerer FPGA (Field Programable Gate Array)-Bausteine.

### Bezugszeichen

- 10: Bild einer Fahrbahn
- 12: Fahrbahn
- 14: Mittelstreifenmarkierung zur Abgrenzung der beiden Fahrspuren
- 16: gelbe Seitenrandmarkierung der linken Fahrspur
- 18: Ausschnitt für Weißabgleich
- 20: Fahrspurerkennungsvorrichtung
- 22: Farbkamera
- 24: Weißabgleicher
- 26: Farbkomponentenermittler
- 28: Grauwertermittler
- 30: Grauwertmodifikator
- S10-S22: Verfahrensschritte

## Patentansprüche

1. Verfahren zur Fahrspurerkennung, bei dem ein digitalisiertes Farbbild (10) einer Fahrbahn (12) mit den folgenden Schritten verarbeitet wird:
- Auswertung der einzelnen Farbkomponenten des Farbbildes (S14) und
- Ermitteln und Ausgeben von farbigen Markierungen auf der Fahrbahn und der Farben der ermittelten farbigen Markierungen auf der Fahrbahn anhand der ausgewerteten Farbkomponenten (S16)
- Umwandeln des Farbbildes (10) in ein monochromes Bild, anschließend:
- Ermitteln derjenigen Markierungen auf der Fahrbahn, deren Grauwert unter dem Grauwert der Fahrbahn im monochromen Bild liegt (S18)
- Modifizieren des monochromen Bildes durch Setzen der Grauwerte von den im vorangehenden Schritt ermittelten Markierungen auf einen Wert oberhalb des genannten Grauwerts der Fahrbahn (S20), so dass ein nachfolgender Fahrspurerkennungsalgorithmus die farbigen Markierungen aufgrund der nun nach der Vorverarbeitung ausreichenden Hell-Dunkel/Dunkel-Hell-Übergänge als für die Fahrspurerkennung wesentliche Markierungen identifizieren kann, wobei dieser auf Basis monochromer Bilder und weißer Markierungen auf einer Fahrbahn arbeitet und eine zuverlässige Erkennung von Markierungen für helle Markierungen auf dunklem Untergrund gewährleistet,
- Ausgeben des so verarbeiteten und modifizierten Bildes an den Fahrspurerkennungsalgorithmus für monochrome Bilder (S22), und
- Verarbeitung durch diesen Fahrspurerkennungsalgorithmus für monochrome Bilder, wobei dieser Fahrspurerkennungsalgorithmus anhand der ausgegebenen Farben der Markierungen feststellt, ob einzelne von ihm als Straßenmarkierungen klassifizierte Markierungen korrekt klassifiziert wurden.

2. Verfahren nach Anspruch 1, wobei vor dem Schritt des Ermittelns von Markierungen ein automatischer Weißabgleich des Farbbildes durchgeführt wird (S12).

3. Verfahren nach Anspruch 2, wobei der Weißabgleich durch eine Auswertung der Fahrbahn unmittelbar vor einem Fahrzeug erfolgt,
wobei ein derart großer Ausschnitt der Fahrbahn gewählt wird, dass der Einfluss lokaler Abweichungen in der Farbigkeit auf den Weißabgleich vernachlässigt werden kann.

4. Verfahren nach einem der vorhergehenden Ansprüche, wobei das Ermitteln der Markierungen durch eine Pixelanalyse des digitalisierten Bildes erfolgt, bei der von jedem Pixel der Grauwert ermittelt wird und als Grauwert der Fahrbahn derjenige Grauwert verwendet wird, den die Mehrheit der analysierten Pixel aufweist.

5. Verfahren nach einem der vorhergehenden Ansprüche, wobei einer Markierung nur Pixel mit einem geringeren Grauwert als dem der Fahrbahn (12) zugeordnet werden, sofern sie eine bestimmte Ausdehnung im Bild überschreiten oder eine bestimmte Gestalt besitzen.

6. Vorrichtung (20) zur Fahrspurerkennung, die zur Verarbeitung eines digitalisierten Farbbildes (10) einer Fahrbahn (12) gemäss der folgenden Schritte konfiguriert ist:
- Auswertung der einzelnen Farbkomponenten des Farbbildes (S14) und
- Ermitteln und Ausgeben von farbigen Markierungen auf der Fahrbahn und der Farben der ermittelten farbigen Markierungen auf der Fahrbahn anhand der ausgewerteten Farbkomponenten (S16)
- Umwandeln des Farbbildes (10) in ein monochromes Bild, anschließend:
- Ermitteln derjenigen Markierungen auf der Fahrbahn, deren Grauwert unter dem Grauwert der Fahrbahn im monochromen Bild liegt (S18)
- Modifizieren des monochromen Bildes durch Setzen der Grauwerte von den im vorangehenden Schritt ermittelten Markierungen auf einen Wert oberhalb des genannten Grauwerts der Fahrbahn (S20), so dass ein nachfolgender Fahrspurerkennungsalgorithmus die ermittelten Markierungen aufgrund der nun nach der Vorverarbeitung ausreichenden Hell-Dunkel/Dunkel-Hell-Übergänge als für die Fahrspurerkennung wesentliche Markierungen identifizieren kann, wobei dieser auf Basis monochromer Bilder und weißer Markierungen auf einer Fahrbahn arbeitet und eine zuverlässige Erkennung von Markierungen für helle Markierungen auf dunklem Untergrund gewährleistet,
- Ausgeben des so verarbeiteten und modifizierten Bildes an den Fahrspurerkennungsalgorithmus für monochrome Bilder (S22), und
- Verarbeitung durch diesen Fahrspurerkennungsalgorithmus für monochrome Bilder, wobei dieser Fahrspurerkennungsalgorithmus anhand der ausgegebenen Farben der Markierungen feststellt, ob einzelne von ihm als Straßenmarkierungen klassifizierte Markierungen korrekt klassifiziert wurden.

7. Vorrichtung nach Anspruch 6, die zur Durchführung eines Verfahrens nach einem der Ansprüche 2 bis 5 konfiguriert ist.

8. Automatisches Fahrspurerkennungssystem, das eine Vorrichtung nach Anspruch 6 oder 7 aufweist und Fahrspurdaten ausgibt.

9. Fahrspurwechselwarnsystem oder Fahrspurhaltesystem, das ein automatisches Fahrspurerkennungssystem nach Anspruch 8 aufweist und die von diesem ausgegebenen Fahrspurdaten zum Erkennen eines Fahrspurwechsels verarbeitet.

10. Fahrzeug mit einem automatischen Fahrspurwechselwarnsystem oder Fahrspurhaltesystem nach Anspruch 9.

## Claims

1. A method for lane detection, in which a digitized color picture (10) of a pavement (12) is processed according to the following steps:
• analyzing the individual color components of the color picture (S14) and
• determining and outputting colored markings on the pavement and the colors of the determined colored markings on the pavement on the basis of the analyzed color components (S16),
• converting the color picture (10) into a monochrome picture and afterwards:
• determining those markings on the pavement whose gray-scale value is lower than the gray-scale value of the pavement in the monochrome picture (S18),
• modifying the monochrome picture by setting the gray-scale values of the markings determined in the previous step to a value that is higher than the mentioned gray-scale value of the pavement (S20) so that a subsequent lane detection algorithm can identify, on the basis of the bright-to-dark/dark-to-bright transitions that are now sufficient after preprocessing, the colored markings as markings that are essential for lane detection, wherein said lane detection algorithm operates on the basis of monochrome pictures and white markings on a pavement and ensures a reliable detection of markings for bright markings on a dark ground,
• outputting the picture processed and modified in this manner to the lane detection algorithm for monochrome pictures (S22) and
• processing by said lane detection algorithm for monochrome pictures, wherein said lane detection algorithm determines, on the basis of the outputted colors of the markings, whether individual markings classified by it as road markings have been classified correctly.

2. The method according to Claim 1,
wherein
an automatic white balance of the color picture is performed (S12) prior to the step of determining markings.

3. The method according to Claim 2,
wherein
the white balance is performed by an analysis of the pavement directly in front of a vehicle,
wherein the selected segment of the pavement is so big that the influence of local variations in colorfulness on the white balance can be neglected.

4. The method according to any one of the preceding claims,
wherein
the markings are determined by a pixel analysis of the digitized picture, in which the gray-scale value of each pixel is determined and that gray-scale value which the majority of the analyzed pixels exhibits is used as the gray-scale value of the pavement.

5. The method according to any one of the preceding claims,
wherein
pixels having a gray-scale value lower than that of the pavement (12) are assigned to a marking only if they exceed a particular extension in the picture or have a particular shape.

6. An apparatus (20) for lane detection configured to process a digitized color picture (10) of a pavement (12) according to the following steps:
• analyzing the individual color components of the color picture (S14) and
• determining and outputting colored markings on the pavement and the colors of the determined colored markings on the pavement on the basis of the analyzed color components (S16),
• converting the color picture (10) into a monochrome picture and afterwards:
• determining those markings on the pavement whose gray-scale value is lower than the gray-scale value of the pavement in the monochrome picture (S18),
• modifying the monochrome picture by setting the gray-scale values of the markings determined in the previous step to a value that is higher than the mentioned gray-scale value of the pavement (S20) so that a subsequent lane detection algorithm can identify, on the basis of the bright-to-dark/dark-to-bright transitions that are now sufficient after preprocessing, the determined markings as markings that are essential for lane detection, wherein said lane detection algorithm operates on the basis of monochrome pictures and white markings on a pavement and ensures a reliable detection of markings for bright markings on a dark ground,
• outputting the picture processed and modified in this manner to the lane detection algorithm for monochrome pictures (S22) and
• processing by said lane detection algorithm for monochrome pictures, wherein said lane detection algorithm determines, on the basis of the outputted colors of the markings, whether individual markings classified by it as road markings have been classified correctly.

7. The apparatus according to Claim 6 that is configured to carry out a method according to any one of Claims 2 to 5.

8. An automatic lane detection system that has an apparatus according to Claim 6 or 7 and outputs lane data.

9. A lane departure warning system or lane keeping system that has an automatic lane detection system according to Claim 8 and processes the lane data outputted by said automatic lane detection system for detecting a lane departure.

10. A vehicle with an automatic lane departure warning system or lane keeping system according to Claim 9.

## Revendications

1. Procédé d'identification de voie de circulation, dans lequel une image en couleurs (10) numérisée d'une voie de circulation (12) est traitée avec les étapes suivantes :
• analyse des différentes composantes de couleurs de l'image en couleurs (S14), et
• détermination et délivrance de marquages en couleurs sur la voie de circulation (S16) et des couleurs des marquages en couleurs déterminés sur la voie de circulation à l'aide des composantes de couleurs analysées (S16),
• conversion de l'image en couleurs (10) en une image monochrome, puis :
• détermination des marquages sur la voie de circulation dont la valeur de gris est située sous la valeur de gris de la voie de circulation dans l'image monochrome (S18),
• modification de l'image monochrome par le réglage des valeurs de gris des marquages déterminés dans l'étape précédente à une valeur au-dessus de la valeur de gris citée de la voie de circulation (S20) de telle sorte qu'un algorithme ultérieur d'identification de voie de circulation peut identifier en tant que marquages importants pour l'identification de voie de circulation les marquages en couleurs sur la base des transitions clair-foncé/foncé-clair désormais suffisantes après le prétraitement, cet algorithme travaillant sur la base d'images monochromes et de marquages blancs sur une voie de circulation et garantissant une identification fiable de marquages pour des marquages clairs sur un fond sombre,
• délivrance de l'image ainsi traitée et modifiée à l'algorithme d'identification de voie de circulation pour des images monochromes (S22), et
• traitement par cet algorithme d'identification de voie de circulation pour des images monochromes, cet algorithme d'identification de voie de circulation constatant, à l'aide des couleurs délivrées des marquages, si différents marquages classés par lui en tant que marquages routiers ont été classés correctement.

2. Procédé selon la revendication 1,
une balance automatique des blancs de l'image en couleurs étant effectuée avant l'étape de la détermination de marquages (S12).

3. Procédé selon la revendication 2,
la balance des blancs étant effectuée par une analyse de la voie de circulation immédiatement devant un véhicule,
un tronçon d'une telle dimension de la voie de circulation étant choisi de telle sorte que l'influence de différences locales dans le coloris sur la balance des blancs peut être négligée.

4. Procédé selon l'une des revendications précédentes,
la détermination des marquages étant effectuée par une analyse des pixels de l'image numérisée, dans laquelle la valeur de gris de chaque pixel est déterminée et la valeur de gris utilisée comme valeur de gris de la voie de circulation est celle qui présente la majorité des pixels analysés.

5. Procédé selon l'une des revendications précédentes,
seuls des pixels avec une valeur de gris plus faible que celle de la voie de circulation (12) étant affectés à un marquage sous réserve qu'ils dépassent une étendue définie dans l'image ou qu'ils possèdent une forme définie.

6. Dispositif (20) d'identification de voie de circulation, qui est configuré pour le traitement d'une image en couleurs (10) numérisée d'une voie de circulation (12) selon les étapes suivantes :
• analyse des différentes composantes de couleurs de l'image en couleurs (S14), et
• détermination et délivrance de marquages en couleur sur la voie de circulation et des couleurs des marquages en couleur déterminés sur la voie de circulation à l'aide des composantes de couleurs analysées (S16),
• conversion de l'image en couleurs (10) en une image monochrome, puis :
• détermination des marquages sur la voie de circulation dont la valeur de gris est située sous la valeur de gris de la voie de circulation dans l'image monochrome (S18),
• modification de l'image monochrome par le réglage des valeurs de gris des marquages déterminés dans l'étape précédente à une valeur au-dessus de la valeur de gris citée de la voie de circulation (S20) de telle sorte qu'un algorithme ultérieur d'identification de voie de circulation peut identifier en tant que marquages importants pour l'identification de voie de circulation les marquages déterminés sur la base des transitions clair-foncé/foncé-clair désormais suffisantes après le prétraitement, cet algorithme travaillant sur la base d'images monochromes et de marquages blancs sur une voie de circulation et garantissant une identification fiable de marquages pour des marquages clairs sur un fond sombre,
• délivrance de l'image ainsi traitée et modifiée à l'algorithme d'identification de voie de circulation pour des images monochromes (S22), et
• traitement par cet algorithme d'identification de voie de circulation pour des images monochromes, cet algorithme d'identification de voie de circulation constatant, à l'aide des couleurs délivrées des marquages, si différents marquages classés par lui en tant que marquages routiers ont été classés correctement.

7. Dispositif selon la revendication 6, qui est configuré pour la réalisation du procédé selon l'une des revendications 2 à 5.

8. Système automatique d'identification de voie de circulation, qui présente un dispositif selon la revendication 6 ou 7 et délivre des données de voie de circulation.

9. Système d'alarme de changement de voie de circulation ou système de maintien de voie de circulation, qui présente un système automatique d'identification de voie de circulation selon la revendication 8 et qui traite les données de voie de circulation délivrées par celui-ci pour la détection d'un changement de voie de circulation.

10. Véhicule avec un système automatique d'alarme de changement de voie de circulation ou système de maintien de voie de circulation selon la revendication 9.
